(19) Europäisches Patentamt
European Patent Office
Office européen des brevets

(11) **EP 4 635 807 A1**

(12) **DEMANDE DE BREVET EUROPEEN**

(43) Date de publication:
**22.10.2025 Bulletin 2025/43**

(21) Numéro de dépôt: **25161337.8**

(22) Date de dépôt: **03.03.2025**

(51) Classification Internationale des Brevets (IPC):
**B60T 7/04** *(2006.01)* **B60T 7/06** *(2006.01)*

(52) Classification Coopérative des Brevets (CPC):
**B60T 7/042; B60T 7/06; B60T 8/3255;
F16D 66/025; G05G 1/38;** B60T 2220/04

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **16.04.2024 FR 2403952**

(71) Demandeur: **Robert Bosch GmbH
70442 Stuttgart (DE)**

(72) Inventeurs:
• **Sprocq, Raynald
77450 Esbly (FR)**
• **Anderson, Chris
75002 Paris (FR)**

(54) **FREIN ÉLECTRONIQUE**

(57) Frein électronique (100) avec un patin de frein (110) recevant la poussée (P) du conducteur demandant une action de freinage, comprenant un socle (1), un coulisseau (3) associé à un chemin de guidage (31), et soumis à l'action d'un ressort de rappel (5).

Une biellette (4) inclinée par rapport à la direction (xx) du chemin de guidage (31) et à la direction (yy) de la poussée (Pi), une première extrémité (41) reliée, au patin (110), et une seconde extrémité (42) reliée au coulisseau (3).

Un capteur de (61) détectant la position de déplacement (Pd) du coulisseau (3) correspondant à la poussée (P), pour former le signal de commande de frein (SC).

[Fig. 1]

EP 4 635 807 A1

# EP 4 635 807 A1

**Description**

DOMAINE DE L'INVENTION

La présente invention se rapporte à une pédale de frein électronique de véhicule automobile.

ETAT DE LA TECHNIQUE

Les freins électroniques sont connus. Ils sont toutefois, en général, assimilables à des pédales mécaniques par leur encombrement.

BUT DE L'INVENTION

La présente invention a pour but de développer une pédale de frein électronique d'encombrement réduit et permettant de détecter efficacement et fidèlement la poussée exercée par le conducteur sur la pédale pour générer un signal de commande de frein précis, répondant fidèlement à la demande du conducteur.

EXPOSE ET AVANTAGES DE L'INVENTION

A cet effet, l'invention a pour objet un frein électronique avec un patin de frein recevant la poussée du conducteur demandant une action de freinage, comprenant : un socle portant le patin de frein, un coulisseau associé à un chemin de guidage, de direction inclinée par rapport à la direction de la poussée, et soumis à l'action d'un ressort de rappel, une biellette inclinée par rapport à la direction du chemin de guidage et à la direction de la poussée et ayant une première extrémité reliée, articulée, au patin, une seconde extrémité reliée, articulée, au coulisseau, un capteur de position détectant la position de déplacement du coulisseau correspondant à la poussée, un circuit de traitement générant le signal de commande de frein à partir du signal de position du coulisseau, la poussée de la demande de freinage appliquée sur le patin de frein étant transmise à la biellette poussant le coulisseau dont la position de déplacement est saisie par le capteur de position.

Cette pédale de frein a l'avantage d'être d'un encombrement très réduit, c'est-à-dire d'être de très faible épaisseur grâce à la biellette qui transforme le mouvement de poussée de la pédale qui est dans le sens de l'épaisseur de la pédale de frein en un mouvement du coulisseau sur une trajectoire sensiblement perpendiculaire à la direction de la poussée.

La transformation du mouvement du conducteur sur la pédale en un mouvement de translation permet d'augmenter la résolution de la détection, c'est-à-dire une détection plus précise de la position variable du patin de frein au cours de l'actionnement par le conducteur.

Suivant une caractéristique avantageuse, le patin est porté par un bras monté pivotant sur le socle.

Suivant une autre caractéristique avantageuse, le ressort de rappel comprend un ressort de compression poussant le coulisseau vers sa position neutre ou un ressort à branches associé au bras et le poussant vers sa position neutre associée à la position neutre du coulisseau, ou la combinaison des deux ressorts dont les constantes de ressort s'ajoutent et formant la constante du ressort de rappel.

Cette combinaison de deux ressorts permet un fonctionnement particulièrement régulier et précis de la pédale de frein électronique.

Cette constante du ressort combiné est en quelque sorte indépendante du rapport des constantes des deux ressorts de cette combinaison.

Suivant une caractéristique avantageuse, le ressort à branche est monté sur l'axe du bras ce qui permet un actionnement précis du bras sans augmenter l'encombrement.

Suivant une autre caractéristique avantageuse, le patin a une cavité recevant l'extrémité de la biellette, directement à travers le bras ou par l'intermédiaire d'une déformation en forme de bouchon creux du bras.

Cette structure de l'assemblage du patin au bras permet d'utiliser l'épaisseur du patin pour augmenter la longueur de la biellette ou réciproquement réduire l'épaisseur de l'ensemble de la pédale de frein.

Suivant une autre caractéristique avantageuse, le bouchon creux du bras reçoit le support du patin par la forme complémentaire de la cavité du support. Cet assemblage permet d'adapter la forme et l'aspect du patin de frein à différents impératifs ou formes imposées par les constructeurs sans nécessiter de modifications aux autres parties de la pédale de frein.

BREVE DESCRIPTION DES DESSINS

La présente invention sera décrite ci-après de manière plus détaillée à l'aide de modes de réalisation d'un frein électronique selon l'invention représentée dans les dessins annexés dans lesquels :

[Fig. 1] schéma de la pédale de commande du frein électronique selon l'invention,
[Fig. 2] schéma géométrique du frein de la figure 1,
[Fig. 3] schéma d'un premier mode de réalisation du frein électronique selon l'invention,
[Fig. 4a] vue d'un deuxième mode de réalisation du frein en position de repos,
[Fig. 4b] vue du deuxième mode de réalisation du frein actionné,

DESCRIPTION DE MODES DE REALISATION DE L'INVENTION

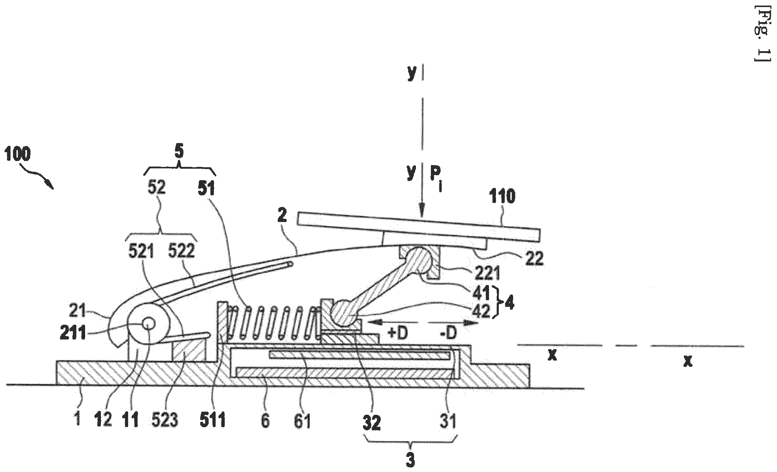

La figure 1 montre le schéma d'un frein électronique 100 avec un patin de frein 110 recevant la poussée P du conducteur demandant une action de freinage. Le frein 100 comprend un socle 1 portant le patin 110 par un bras 2 relié au socle 1 par un axe 11 installé dans un palier 12 du socle. Un ressort 52 à deux branches 521, 522 soulève le bras 2 vers sa position neutre correspondant à l'absence de poussée P à l'emplacement, de préférence habituel d'une pédale de frein dans un véhicule. Le frein 100 s'appuie par une biellette 4 sur un coulisseau 3 associé à un chemin de guidage 31 du socle de direction XX inclinée par rapport à la direction YY de la poussée Pi. Le coulisseau 3 est soumis à l'action d'un ressort 51 qui tend à le rappeler vers sa position neutre qui est celle du frein 100 au repos, sans poussée (P=0) exercée sur le patin de frein.

Le ressort 51 est représenté comme ressort de compression s'opposant à la composante dans cette direction de la poussée transmise par le patin à la biellette. Mais ce ressort 51 peut également être un ressort de traction relié au coulisseau dans le sens opposé.

Le ressort (de compression ou de traction) 51 du coulisseau 3 et le ressort à branches 52 agissent dans le même sens, en parallèle pour opposer une réaction R à la poussée P sur le patin 110. La combinaison des ressorts 51, 52 de constante de ressort k1 et k2 est donc l'équivalent d'un ressort 5 de constante de ressort k=k1+k2.

Ce ressort 5 additionne l'action des ressorts 51, 52, représente cette addition quelle que soit l'importance de l'un ou l'autre ressort 51, 52, même la suppression de l'un ou l'autre ressort.

La biellette 4 qui transmet une partie de la poussée P au coulisseau 3 est inclinée par rapport à la direction XX du chemin de guidage 31 et à la direction YY de la poussée P ; elle relie le patin de frein 110 au coulisseau 3 pour le déplacer dans la direction (+D) contre l'action du ressort 51. La biellette 4 a une première extrémité 41 reliée, articulée, au patin 110 et une seconde extrémité 42 reliée, articulée, au coulisseau 3. Les extrémités 41, 42 sont, de préférence, en forme d'axe d'articulation perpendiculaire au plan de la feuille de la figure 1 ou en forme de rotule engagée chacune dans une coupelle respective du coulisseau 3 et du patin 110. Cette double liaison articulée est, de préférence, solidaire de l'appui respectif contre le patin 110 et contre le coulisseau 3 pour que les liaisons transmettent des efforts de traction et de poussée.

Par rapport à des articulations en forme d'axes, les extrémités à rotule 41, 42 de la biellette 4 ont l'avantage de donner un degré de liberté supplémentaire pour la transmission des efforts et ne pas limiter cette transmission au seul plan de la figure 1 qui constitue l'axe de déplacement du coulisseau, de la biellette 4 et schématiquement de l'appui de poussée P. En pratique, l'axe YY de la poussée P n'est pas nécessairement dans le plan de la figure ; il peut en être de même de la biellette 4 et aussi de l'axe XX du déplacement du coulisseau 3. Mais ce déplacement du coulisseau 4 peut également se faire selon une trajectoire légèrement courbe si les conditions d'installation du frein l'imposent, par exemple, pour des raisons d'encombrement.

Le non-alignement de ces différents composants peut également résulter des jeux des articulations et du point d'application de la poussée sur le patin ainsi que des tolérances de fabrication, et des jeux résultant de l'usure.

La configuration, selon l'invention, permet de rattraper ces différents jeux.

Un capteur de position 61 est associé au chemin de guidage 31 pour détecter la position de déplacement Pd du coulisseau 3 correspondant à la poussée P.

En position neutre, la biellette 4 est inclinée à la fois par rapport à la direction XX et à la direction YY ; celles-ci ne sont pas nécessairement orthogonales.

La poussée P se traduit par un mouvement du coulisseau 3 dans la direction (+D) ; la diminution de la poussée P entraîne un mouvement dans le sens opposé (-D) éventuellement jusqu'à la position neutre.

L'action de freinage demandée correspond en général à une poussée P variable dans le temps et le capteur de position 61 détecte les différentes positions successives Pd du coulisseau 3 et les transmet au circuit de traitement 6 qui génère le signal de frein SF en fonction d'un algorithme de traitement.

La fonction reliant la poussée P et la position Pd du coulisseau 3 asservi au patin 110 par la biellette 4 est une fonction du second degré représentée par un arc d'ellipse comme cela sera vu ci-après.

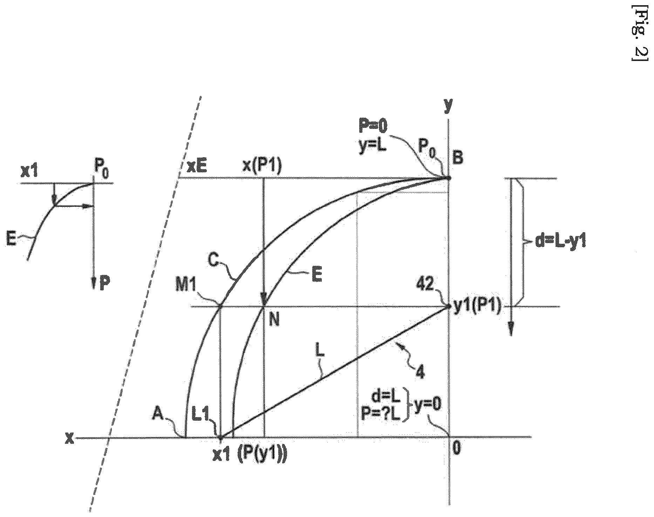

La cinématique de la biellette 4 est schématisée à la figure 2 avec les approximations suivantes, compatibles avec la faible course de pivotement du bras 2 :

- l'extrémité 42 de la biellette 4 se déplace sur l'axe (y) qui est aussi celui de la direction de la poussée P,

- l'autre extrémité 41 de la biellette 4 se déplace sur l'axe (x).

Les extrémités 41, 42 de la biellette 4 ont, dans ce système d'axes (par exemple) orthogonaux, les coordonnées suivantes :

$$\text{extrémité } 41 \begin{cases} x \in [0 - L] \\ y = 0 \end{cases} \qquad \text{extrémité } 42 \begin{cases} x = 0 \\ y \in [0 - L] \end{cases}$$

L est la longueur de la biellette 4.

Les coordonnées des extrémités 41, 42 de la biellette de longueur fixe (L) sont les extrémités de la base (hypoténuse) d'un triangle (rectangle) de sommet O et de côtés (x) et (y).

Dans ces conditions, la relation du triangle rectangle x2+y2=L2 est l'équation d'un cercle sur lequel se déplace le point M (x, y).

L'extrémité 42 de la biellette 4 reçoit la poussée P compensée par la réaction R des ressorts 51, 52, c'est-à-dire du ressort combiné 5.

Comme déjà indiqué, ces ressorts 51, 52 étant en parallèle, leurs coefficients de ressort k1, k2 s'additionnent en un coefficient unique k=k1+k2.

On rappelle que :

- la poussée P s'exerce dans la direction (-y) sur l'extrémité 42 ; la coordonnée (y) est la position de l'extrémité 42 ;
- la direction (x) est celle du coulisseau 3 ; la coordonnée (x) est la position de l'extrémité 41.

Or, la réaction R opposée à la poussée P par les ressorts à l'enfoncement du bras 2, c'est-à-dire de la rotule 42, se définit comme suit :

R=P=kd ;
d : distance d'enfoncement de l'extrémité 42
d=L-y
k= coefficient du ressort 5 combinant les coefficients des deux ressorts 51, 52.

Au point B, le système est au repos ; la poussée P et la réaction R sont nulles.

Lorsque la poussée P fait passer la rotule 42 de sa position B à sa position M1 (y1), on a d=L-yl

La poussée en y1 est donc P=ked=k(L-y1).

Or, les coordonnées (x, y) sont liées par la relation x2+y2=L2, ce qui, par un changement de variable :

$$P = k(L-y) \rightarrow y = L - \frac{P}{k}$$

et en substituant, dans la relation x2+y2=L2 donne :

$$x2 + (L - \frac{P}{k})^2 = L2 \qquad (\text{Formule F1})$$

La formule F1 est l'équation d'une ellipse C qui, dans le système d'axes [(-y) ; (x1)] d'origine B a pour équation :

$$x2 + (P/k)2 = L2$$

ou

$$x = [L2 - (P/k)2]^{\frac{1}{2}}$$

Il suffit de retourner haut / bas (y→-y) et d'inverser l'orientation de l'axe y du graphique de la figure 2 pour avoir l'arc d'ellipse E reliant la poussée P et la position x de l'extrémité 41. Cet arc d'ellipse est représenté séparément dans le repère (P,x1).

La poussée P est donc représentée par la position du coulisseau 3 :

$$P=k\left[L-(k2-x2)^{\frac{1}{2}}\right] \quad \text{(Formule F2)}$$

Connaissant la position x du coulisseau on a donc la poussée P exercée sur le patin 110 pour générer le signal de commande de frein SF qui est fonction de la poussée P.

Selon le premier mode de réalisation (figure 1) du frein électronique 100 représenté aussi par le schéma, le patin de frein 110 est relié à l'appui 221 en forme de coupelle de la deuxième extrémité 42 de la biellette 4 par l'intermédiaire de l'extrémité 22 d'un bras 2 pivotant autour de sa première extrémité 21 reliée à l'axe 11 d'un palier 12 du socle 1.

Le coulisseau 3, mobile en translation sur le chemin de guidage 31 de direction (XX) est poussé par un ressort de compression 51 appuyé contre une butée 511 solidaire du socle 1.

Le bras 2 est équipé d'un ressort à branches 52 dont la première branche 521 s'appuie sur un appui 523 formé par le socle 1 et la deuxième branche 522 s'appuie contre le bras 2.

Le ressort à branches 52 est emmanché sur l'axe 11 du palier 12.

Le ressort 51 et le ressort à branches 52 agissent en parallèle sur la biellette 4 de sorte que leurs constantes de ressort s'ajoutent et constituent un ressort combiné 5 agissant sur le coulisseau 3, la biellette 4 et le patin de frein 110 comme un unique ressort antagoniste 5 s'opposant à la poussée Pi. Selon les impératifs d'encombrement ou de réaction, l'importance de l'un ou l'autre des ressorts 51, 52 est le plus important dans la combinaison représentée par le ressort 5.

La formule de la combinaison des ressorts 51, 52 vaut également pour un unique ressort 51 ou 52 ; dans ce cas, la constante k est égale à un seul coefficient k1 ou k2.

Ainsi, dans la mesure où les articulations des extrémités 41, 42 de la biellette 4 sont reliées au coulisseau 3 et au patin 110 dans le sens de la poussée et celui de la traction, le ressort 5 peut se limiter à un seul ressort 51 ou 52.

De plus, si le ressort 5 se compose uniquement du ressort de compression 51, le mouvement du patin 110 peut être un mouvement de translation dans la direction (yy) et non de pivotement autour de l'axe 11 et assimilé à une trajectoire rectiligne.

Dans l'autre cas limite, le ressort 5 est composé du seul ressort à branches 52 et le mouvement du patin 110 sera un mouvement de pivotement.

Il convient de remarquer que les effets des ressorts 51, 52 non seulement s'ajoutent mais permettent également de compenser les jeux et tolérances résultant de la fabrication et de l'usure pour supprimer l'hystérésis entre le mouvement d'enfoncement du patin 110 et le mouvement de remontée :

- dans le cas du seul ressort 52, le patin 110 est soulevé lorsque la poussée P diminue et la biellette 4 est tirée de sorte que les jeux au niveau de la tête 41 et du coulisseau 3 ne sont pas compensés, ce qui peut se répercuter par un défaut de précision de la détection du coulisseau 3 par le capteur 61.

Or, dans le cas du ressort 51 seul ou combiné, l'effort exercé par le ressort 51 qu'il soit de compression ou de traction, sur le coulisseau 3, s'oppose à la réaction de la biellette 4 et engendre une composante qui plaque le coulisseau 3 contre son chemin de guidage 31 et supprime le jeu de sa position par rapport au capteur 61.

Cette conséquence est vraie qu'il s'agisse pour le coulisseau d'une trajectoire droite, située dans le plan de la figure ou d'une trajectoire inclinée par rapport à ce plan ou d'une trajectoire courbe.

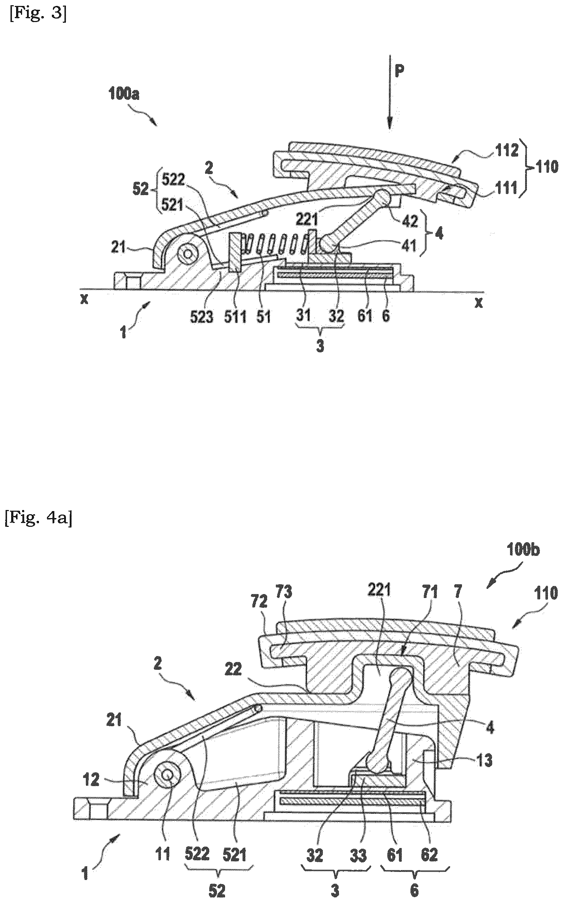

La figure 3 montre un mode de réalisation 100a avec un bras 2 et un coulisseau 3 coopérant respectivement avec un ressort à branches 52 et un ressort de compression 51.

Le patin 110 réalisé séparément du bras 2 et auquel il est ensuite assemblé.

Le patin 110 se compose d'un support 111 recevant l'habillage 112 avec des caractéristiques de forme et aussi des sigles ou autres particularités propres à chaque constructeur.

La cavité de l'extrémité 22 du bras 2 constitue en même temps, un appui 221 assimilable à une coupelle.

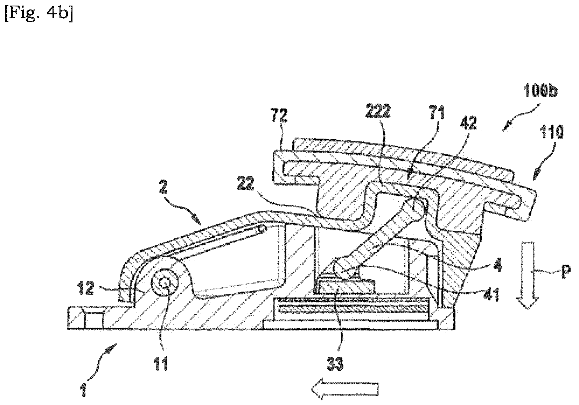

Les figures 4a, 4b montrent un autre mode de réalisation 100b d'un frein électronique composée d'un socle 1 formant un palier 12 et une structure de châssis 13. Le socle porte l'extrémité 21 d'un bras par son axe 11 ; il s'appuie en position de repos ou position neutre sur la structure de châssis 13 du socle 1. L'autre extrémité 22 porte le patin de frein 110 ; elle a un relief en forme de bouchon creux 222 sur lequel s'enclipse le patin 110 composé d'un support 7, par sa cavité 71 de forme complémentaire à celle du bouchon 222.

Le bouchon creux 222 utilise l'épaisseur du patin 110 à la fois pour réaliser l'assemblage du support 7 et pour recevoir une partie de la longueur (L) de la biellette 4 dont dépend la course du coulisseau 3 et la résolution (précision) de la position Pd du coulisseau 3 pour la formation du signal de freinage SF. Cet agencement permet de réduire la hauteur (ou épaisseur) totale de la frein électronique 100.

Le support 7 reçoit l'habillage 72 du patin 110 accroché au bord 73 du dessus du support 7. Cet habillage 72 est surmoulé ou accroché au support 7 ; il a la forme et le décor demandés par le constructeur en fonction de ses impératifs esthétiques (forme, impression de relief, marque, ...). Cela permet d'adapter la même pédale de frein aux différents constructeurs automobiles par la simple adaptation de l'habillage 72 du patin de frein 110.

La biellette 4 est engagée par son extrémité 41 en forme de rotule dans une coupelle magnétique 32 sur l'aimant 33 du coulisseau 3. Il n'y a pas de ressort de rappel. La biellette 4 est maintenue dans sa position instantanée par le simple fait qu'elle est l'hypoténuse de longueur fixe du triangle rectangle évoqué précédemment et dont les extrémités 41, 42 correspondant aux deux sommets du triangle, sont astreintes à se déplacer sur les axes (xx) et (yy) non référencés dans les figures 4a, 4b.

Le bras 2 est soumis au ressort à branches 52 dont l'une des branches 521 s'appuie sur le dessus du socle 1 et l'autre branche 522 s'appuie contre le dessous du bras 2.

L'extrémité 42 est en forme de rotule engagée dans le creux du bouchon 222 qui a une cavité de rotule.

Par son aimant 33, le coulisseau 3 coopère avec un capteur de position 61 associé au circuit de traitement 6 sur la carte de circuit imprimé 62 intégrée dans le socle 1 par en dessous.

En résumé, la figure 4a montre en coupe, le frein 100b en position neutre ou d'attente dans laquelle la biellette 4 est inclinée par rapport aux axes de référence (xx) et (yy) non représentés ici.

La figure 4b montre la position des composants du frein 100b sous l'effet d'une poussée P déplaçant la biellette 4 et le coulisseau 3 jusque dans la position de fin de course.

NOMENCLATURE DES ELEMENTS PRINCIPAUX (sans les suffixes alphabétiques)

    100 Frein électronique
    110 Patin
    111 Support
    112 Habillage
    1 Socle
    11 Axe
    12 Palier
    13 Structure de châssis
    2 Bras
    21 Première extrémité du bras
    211 Pivot
    22 Deuxième extrémité du bras
    221 Appui / coupelle
    222 Bouchon creux
    223 Gorge
    3 Coulisseau
    31 Chemin de guidage
    32 Coupelle de rotule
    33 Aimant
    4 Biellette
    41 Première extrémité de la biellette / rotule
    42 Seconde extrémité de la biellette / rotule
    5 Ressort de rappel
    51 Ressort de compression
    511 Butée
    52 Ressort à branches
    521 Première branche du ressort
    522 Deuxième branche du ressort
    523 Appui de la première branche
    6 Circuit de traitement
    61 Capteur de position du coulisseau
    62 Carte de circuit imprimé
    7 Support
    71 Cavité
    72 Habillage du patin
    xx Direction du chemin de guidage 31
    yy Direction de la poussée P
    P Poussée exercée sur le patin
    Pd Position du coulisseau pour la poussée P
    SF Signal de freinage

C Cercle
E Ellipse

## Revendications

1. Frein électronique (100) avec un patin de frein (110) recevant la poussée (P) du conducteur demandant une action de freinage, comprenant :

   A. un socle (1) portant le patin de frein (110),
   B. un coulisseau (3) associé à un chemin de guidage (31), de direction (xx) inclinée par rapport à la direction (yy) de la poussée (P), et soumis à l'action d'un ressort de rappel (5),
   C. une biellette (4) inclinée par rapport à la direction (xx) du chemin de guidage (31) et à la direction (yy) de la poussée (Pi) et ayant

      * une première extrémité (41) reliée, articulée, au patin (110),
      * une seconde extrémité (42) reliée, articulée, au coulisseau (3),

   D. un capteur de position (61) détectant la position de déplacement (Pd) du coulisseau (3) correspondant à la poussée (P),
   E. un circuit de traitement (6) générant le signal de commande de frein (SC) à partir du signal de position (Pd) du coulisseau (3),

      - la poussée (P) de la demande de freinage appliquée sur le patin de frein (110) étant transmise à la biellette (4) poussant le coulisseau (3) dont la position de déplacement (Pd) est saisie par le capteur de position (61).

2. Frein électronique selon la revendication 1,
   **caractérisé en ce que**
   le patin (110) est porté par un bras (2) monté pivotant sur le socle (1).

3. Frein électronique selon la revendication 1,
   **caractérisé en ce que**
   le ressort de rappel (5) comprend

      - un ressort de compression (51) rappelant le coulisseau (3) vers sa position neutre ou un ressort à branches (52) associé au bras (2) et le rappelant vers sa position neutre associée à la position neutre du coulisseau (3), ou
      - la combinaison des deux ressorts (51, 52) dont les constantes de ressort (k1, k2) s'ajoutent et forment la constante (k) du ressort de rappel (5).

4. Frein électronique selon la revendication 1,
   **caractérisé en ce que**
   le ressort à branches (52) est monté sur l'axe (11) du bras (2).

5. Frein électronique selon la revendication 1,
   **caractérisé en ce que**
   le patin (110) a une cavité (71) recevant l'extrémité (42) de la biellette (4), directement à travers le bras (2) ou par l'intermédiaire d'une déformation en forme de bouchon creux (222) du bras (2).

6. Frein électronique selon la revendication 5,
   **caractérisé en ce que**
   le bouchon creux (222) du bras (2) reçoit le support (7) du patin (110) par la forme complémentaire de la cavité (71) du support (7).

7. Frein électronique selon la revendication 1,
   **caractérisé en ce que**
   la biellette (4) a :

      - une première extrémité (41) en forme de rotule reçue dans une coupelle de rotule (32) du coulisseau (3) et,

- une seconde extrémité (42) en forme de rotule engagée dans une coupelle du patin (10).

8. Frein électronique selon la revendication 1,
   **caractérisé en ce que**
   le ressort de rappel (51) appliqué au coulisseau (3) est un ressort de compression ou un ressort de traction.

[Fig. 1]

[Fig. 2]

[Fig. 3]

[Fig. 4a]

[Fig. 4b]

# EP 4 635 807 A1

Europäisches Patentamt
European Patent Office
Office européen des brevets

# RAPPORT DE RECHERCHE EUROPEENNE

**Numéro de la demande**

EP 25 16 1337

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2023/106641 A1 (KIM EUN SIK [KR] ET AL) 6 avril 2023 (2023-04-06) | 1-4,6,8 | INV.<br>B60T7/04 |
| Y | * figure 1 et paragraphes par. 37, 38, 42, 43 * | 5,7 | B60T7/06 |
| | ----- | | |
| X | EP 3 222 456 A1 (VALEO EMBRAYAGES [FR]) 27 septembre 2017 (2017-09-27) * figure 4, éléments 310, 700, 600, 500, PCB 3000, et par. 2, 85, 92, 93, 110, 111, 128,132 * | 1-3,8 | |
| | ----- | | |
| Y | US 6 253 635 B1 (HUBER MICHAEL [DE]) 3 juillet 2001 (2001-07-03) * élément 84 * | 5,7 | |
| | ----- | | |
| A | US 11 787 373 B2 (KSR IP HOLDINGS LLC [US]) 17 octobre 2023 (2023-10-17) * le document en entier * | 1-8 | |
| | ----- | | |
| A | US 2023/173916 A1 (KIM EUN SIK [KR] ET AL) 8 juin 2023 (2023-06-08) * le document en entier * | 1-8 | DOMAINES TECHNIQUES RECHERCHES (IPC) |
| | ----- | | B60T |
| A | US 2022/089135 A1 (AUSTERMEIER WERNER [DE] ET AL) 24 mars 2022 (2022-03-24) * le document en entier * | 1-8 | |
| | ----- | | |
| A | EP 2 900 513 B1 (BOSCH GMBH ROBERT [DE]) 8 mars 2017 (2017-03-08) * le document en entier * | 1-8 | |
| | ----- | | |
| A | US 2023/406270 A1 (HOKUTO DAISUKE [JP] ET AL) 21 décembre 2023 (2023-12-21) * le document en entier * | 1-8 | |
| | ----- | | |
| A | US 2022/147093 A1 (KIM EUN SIK [KR] ET AL) 12 mai 2022 (2022-05-12) * le document en entier * | 1-8 | |
| | ----- | | |
| | -/-- | | |

Le présent rapport a été établi pour toutes les revendications

| Lieu de la recherche | Date d'achèvement de la recherche | Examinateur |
|---|---|---|
| Munich | 29 avril 2025 | Ranieri, Sebastiano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

| Europäisches Patentamt European Patent Office Office européen des brevets | **RAPPORT DE RECHERCHE EUROPEENNE** | **Numéro de la demande** EP 25 16 1337 |

## DOCUMENTS CONSIDERES COMME PERTINENTS

| Catégorie | Citation du document avec indication, en cas de besoin, des parties pertinentes | Revendication concernée | **CLASSEMENT DE LA DEMANDE (IPC)** |
|---|---|---|---|
| A | DE 10 2022 203320 A1 (CONTINENTAL AUTOMOTIVE TECH GMBH [DE]) 5 octobre 2023 (2023-10-05) * le document en entier * ----- | 1-8 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 29 avril 2025 | Ranieri, Sebastiano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................................
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**                    EP 25 16 1337

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-04-2025

| Document brevet cité au rapport de recherche | Date de publication | Membre(s) de la famille de brevet(s) | Date de publication |
|---|---|---|---|
| US 2023106641 A1 | 06-04-2023 | CN 115923506 A<br>DE 102022206407 A1<br>KR 20230049184 A<br>US 11602990 B1 | 07-04-2023<br>06-04-2023<br>13-04-2023<br>14-03-2023 |
| EP 3222456 A1 | 27-09-2017 | BR 102017005572 A2<br>CN 107215207 A<br>EP 3222456 A1<br>FR 3048927 A1<br>KR 20170109495 A | 26-09-2017<br>29-09-2017<br>27-09-2017<br>22-09-2017<br>29-09-2017 |
| US 6253635 B1 | 03-07-2001 | DE 19741366 C1<br>FR 2768678 A1<br>GB 2332502 A<br>US 6253635 B1 | 15-04-1999<br>26-03-1999<br>23-06-1999<br>03-07-2001 |
| US 11787373 B2 | 17-10-2023 | CN 117751336 A<br>DE 112022002789 T5<br>US 2022379852 A1<br>US 2023415712 A1<br>WO 2022251456 A1 | 22-03-2024<br>11-04-2024<br>01-12-2022<br>28-12-2023<br>01-12-2022 |
| US 2023173916 A1 | 08-06-2023 | CN 116215467 A<br>DE 102022206410 A1<br>KR 20230083378 A<br>US 2023173916 A1 | 06-06-2023<br>07-06-2023<br>12-06-2023<br>08-06-2023 |
| US 2022089135 A1 | 24-03-2022 | CN 113302572 A<br>DE 102019101646 A1<br>EP 3914987 A1<br>US 2022089135 A1<br>WO 2020152022 A1 | 24-08-2021<br>23-07-2020<br>01-12-2021<br>24-03-2022<br>30-07-2020 |
| EP 2900513 B1 | 08-03-2017 | CN 104661850 A<br>DE 102012217541 A1<br>EP 2900513 A1<br>WO 2014048661 A1 | 27-05-2015<br>27-03-2014<br>05-08-2015<br>03-04-2014 |
| US 2023406270 A1 | 21-12-2023 | CN 116917830 A<br>DE 112022001183 T5<br>JP 7452467 B2<br>JP 2022130111 A<br>JP 2024055930 A<br>US 2023406270 A1<br>WO 2022181326 A1 | 20-10-2023<br>07-12-2023<br>19-03-2024<br>06-09-2022<br>19-04-2024<br>21-12-2023<br>01-09-2022 |

EPO FORM P0460

Pour tout renseignement concernant cette annexe : voir Journal Officiel de l'Office européen des brevets, No.12/82

page 1 de 2

**EP 4 635 807 A1**

## ANNEXE AU RAPPORT DE RECHERCHE EUROPEENNE
## RELATIF A LA DEMANDE DE BREVET EUROPEEN NO.

EP 25 16 1337

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-04-2025

| Document brevet cité au rapport de recherche | Date de publication | Membre(s) de la famille de brevet(s) | Date de publication |
|---|---|---|---|
| US 2022147093 A1 | 12-05-2022 | CN 114475242 A | 13-05-2022 |
| | | DE 102021205404 A1 | 12-05-2022 |
| | | KR 20220064791 A | 19-05-2022 |
| | | US 2022147093 A1 | 12-05-2022 |
| DE 102022203320 A1 | 05-10-2023 | AUCUN | |

EPO FORM P0460

Pour tout renseignement concernant cette annexe : voir Journal Officiel de l'Office européen des brevets, No.12/82

page 2 de 2